# FASCICULE DE BREVET EUROPEEN

(11) **EP 2 706 267 B1**
(45) Date de publication et mention de la délivrance du brevet: **08.04.2015**
(21) Numéro de dépôt: 13180394.2
(22) Date de dépôt: 14.08.2013
(51) Int. Cl.: G02B 7/182, F16H 21/52, F16M 11/18

(54) **Dispositif de positionnement angulaire comprenant deux ensembles mécaniques de transmission de mouvement imbriqués à deux points morts chacun**
Vorrichtung zur Winkelpositionierung, die zwei mechanische Bewegungsübertragungseinheiten umfasst, die beide jeweils an zwei Totpunkten verschachtelt sind
Angular positioning device comprising two interleaved mechanical assemblies for movement transmission, with two dead centres each

(30) Priorité: 31.08.2012 FR 1202341
(43) Date de publication de la demande: 12.03.2014
(73) Titulaire: Thales, 92200 Neuilly Sur Seine (FR)
(72) Inventeur: Vezain, Stéphane, 06210 Mandelieu (FR); Baudasse, Yannick, 06130 Grasse (FR); Guionie, M. Sebastien, 83600 Fréjus (FR)
(74) Mandataire: Collet, Alain

(56) Documents cités:
- FR-A1- 2 234 617
- GB-A- 1 306 641
- JP-A- 2002 148 685
- US-A- 3 026 615

## Description

L'invention se situe dans le domaine de la transmission de mouvements mécaniques. Elle concerne un dispositif mécanique de positionnement angulaire et s'applique notamment aux instruments optiques nécessitant de positionner un élément tel qu'un miroir selon trois positions prédéfinies.

De nombreux dispositifs mécaniques existent pour réaliser un positionnement angulaire. Par exemple, un simple moteur pas à pas peut permettre un positionnement angulaire selon l'un de ses pas. Cependant, les dispositifs conventionnels peuvent s'avérer inadaptés pour certaines applications. Tel est par exemple le cas lorsque des précisions angulaires de l'ordre du centième de degré sont nécessaires. En outre, on rencontre des difficultés supplémentaires lorsque l'on souhaite obtenir une bonne stabilité et une bonne fiabilité des différentes positions angulaires. En d'autres termes, il est difficile d'obtenir des positions précises qui puissent être maintenues pendant des durées données, et qui puissent être retrouvées après avoir été quittées. Des exigences sévères en termes de précision, de stabilité et de fiabilité se rencontrent notamment dans le domaine de l'instrumentation optique. À titre d'exemple, un instrument optique peut nécessiter un étalonnage de l'un de ses capteurs. Cet étalonnage peut consister à orienter un miroir selon trois positions angulaires distinctes. Une première position, appelée position scène, correspond à la position dans laquelle le miroir réfléchit un rayonnement depuis une zone à étudier. On dit que le miroir pointe vers la zone à étudier. Deux autres positions, appelées positions d'étalonnage, correspondent à des positions dans lesquelles le miroir réfléchit le rayonnement de sources de référence. Ces émetteurs de référence sont par exemple des corps noirs ou une visée vers l'espace froid. L'étalonnage du capteur nécessite dans ce cas un positionnement du miroir dans la première position d'étalonnage, puis dans la deuxième position d'étalonnage, et enfin dans la position scène.

L'un des éléments influençant le comportement du dispositif mécanique de positionnement est bien entendu l'actionneur. En règle générale, il s'agit d'un moteur électrique rotatif. Différents types de moteurs électriques peuvent être utilisés. Les moteurs à bobine mobile, dits "voice coil", présentent une grande précision. Cependant, ils nécessitent une commande à l'aide d'un asservissement en boucle fermée et le maintien dans une position donnée impose une alimentation électrique permanente. Les actionneurs piézoélectriques présentent également une grande précision. Cependant, ils doivent aussi être commandés par un asservissement en boucle fermée. En outre, ils présentent un produit effort - course relativement faible. En pratique, il est donc nécessaire d'utiliser des actionneurs piézoélectriques aux dimensions importantes. Les moteurs pas à pas ont eux l'avantage de pouvoir être commandés sans boucle fermée et permettent le maintien d'une position sans nécessiter d'alimentation. En revanche, la précision angulaire est généralement insuffisante. Une solution consiste à associer un réducteur mécanique au moteur pas à pas. Le réducteur permet de réduire le déplacement angulaire en sortie par rapport au déplacement angulaire du moteur. Ainsi, pour chaque pas du moteur, le déplacement angulaire en sortie représente une fraction de ce pas. Le réducteur peut par exemple prendre la forme d'un dispositif à engrenages. Cependant, afin d'obtenir de faibles rapports de transmission, par exemple de l'ordre du centième, le dispositif doit comprendre un nombre important de roues dentées. Outre les problèmes de complexité et d'encombrement, un tel réducteur introduit du jeu et un couple résistant. Des dispositifs de suppression du jeu existent, mais ils introduisent un couple supplémentaire. Une autre solution de réducteur repose sur l'utilisation d'un bras animé en rotation par le moteur via deux bielles. Le bras est en liaison pivot avec un châssis. Une première bielle est entraînée en rotation par le moteur. La deuxième bielle est reliée à la première bielle par une première liaison pivot et au bras par une deuxième liaison pivot. Lorsque les axes de ces deux liaisons pivots se trouvent dans un même plan avec l'axe de rotation du moteur, les deux bielles génèrent un point mort, c'est-à-dire une configuration dans laquelle le mouvement de rotation du bras s'inverse. Cette inversion s'accompagne d'une diminution ponctuelle du rapport de transmission entre le déplacement angulaire du bras et celui du rotor. Néanmoins, un tel dispositif ne comporte que deux points morts et n'est pas adapté pour un positionnement angulaire selon trois positions distinctes.

Le brevet US 3 026 615 décrit deux ensembles mécaniques comprenant un ensemble de quatre bielles et deux dispositifs d'actionnement. Le brevet GB 1 306 641 décrit un appareil de visualisation et d'impression disposant de deux points morts pour définir deux positions angulaires d'un miroir. Le brevet FR 2 234 617 décrit un dispositif d'orientation de miroir comprenant deux points morts. Le brevet JP 2002 148685 décrit un dispositif de positionnement angulaire d'un miroir permettant la rotation d'un support selon deux axes.

Un but de l'invention est notamment de fournir un dispositif mécanique apte à fournir trois positions angulaires distinctes avec un faible rapport de transmission. A cet effet, l'invention propose de combiner deux ensembles mécaniques à bielles, un premier ensemble mécanique générant deux points morts dans un mouvement de rotation autour d'un premier axe, et le deuxième ensemble mécanique générant deux points morts dans un mouvement de rotation autour d'un deuxième axe, non parallèle avec le premier. Plus précisément, l'invention a pour objet un dispositif de positionnement angulaire comportant un châssis, un premier ensemble mécanique de transmission de mouvement et un deuxième ensemble mécanique de transmission de mouvement. Le premier ensemble mécanique comprend :
▪ un premier support en liaison pivot avec le châssis selon un premier axe,
▪ une première bielle en liaison pivot avec le premier support selon un deuxième axe, parallèle au premier axe,
▪ une deuxième bielle en liaison pivot avec la première bielle selon un troisième axe, et en liaison pivot avec le châssis selon un quatrième axe, les troisième et quatrième axes étant parallèles aux premier et deuxième axes, et
▪ un premier dispositif d'actionnement apte à entraîner la deuxième bielle en rotation selon le quatrième axe.

Le premier ensemble mécanique de transmission de mouvement est configuré de manière à ce que le premier support puisse prendre deux positions angulaires distinctes autour du premier axe pour chacune desquelles la première et la deuxième bielle génèrent un point mort pour le premier support.

Le deuxième ensemble mécanique de transmission de mouvement comprend :
▪ un deuxième support en liaison pivot avec le premier support selon un cinquième axe, non parallèle au premier axe,
▪ une troisième bielle en liaison pivot avec le deuxième support selon un sixième axe, et en liaison pivot avec le deuxième support selon un septième axe, parallèle au cinquième axe,
▪ une quatrième bielle en liaison pivot avec la troisième bielle selon un huitième axe, et en liaison pivot avec le châssis selon un neuvième axe, les huitième et neuvième axes étant parallèles aux cinquième et septième axes, et
▪ un deuxième dispositif d'actionnement apte à entraîner la quatrième bielle en rotation selon le neuvième axe,

Le deuxième ensemble mécanique de transmission de mouvement est configuré de manière à ce que le deuxième support puisse prendre deux positions angulaires distinctes autour du cinquième axe pour chacune desquelles la troisième et la quatrième bielle génèrent un point mort pour le deuxième support.

Le dispositif de positionnement angulaire est configuré de manière à ce que le cinquième axe soit parallèle au septième axe dans l'une des positions angulaires du premier support autour du premier axe, et à ce que le sixième axe soit confondu avec le premier axe dans l'une des positions angulaires du deuxième support autour du cinquième axe.

Selon une forme particulière de réalisation, les septième, huitième et neuvième axes sont orthogonaux aux premier, deuxième, troisième et quatrième axes.

Le premier dispositif d'actionnement peut comprendre un moteur rotatif comportant un stator solidaire du châssis du dispositif de positionnement angulaire, et un rotor solidaire de la deuxième bielle. De manière analogue, le deuxième dispositif d'actionnement peut comprendre un moteur rotatif comportant un stator solidaire du châssis du dispositif de positionnement angulaire, et un rotor solidaire de la quatrième bielle.

Selon une forme particulière de réalisation, le premier support comporte un bras d'entraînement, la liaison pivot du premier support avec le châssis étant réalisée au niveau d'une première extrémité du bras d'entraînement, et la liaison pivot du premier support avec la première bielle étant réalisée au niveau d'une deuxième extrémité du bras d'entraînement.

Selon une forme particulière de réalisation, le premier support comporte un cadre à l'intérieur duquel est disposé le deuxième support.

La première et la deuxième bielle peuvent générer un point mort pour le premier support lorsque le troisième axe coïncide avec le plan contenant le deuxième axe et le quatrième axe. De manière analogue, la troisième et la quatrième bielle peuvent générer un point mort pour le deuxième support lorsque le huitième axe coïncide avec le plan contenant le septième axe et le neuvième axe.

Selon une forme particulière de réalisation, les liaisons pivots entre la troisième bielle et le deuxième support comprennent une première liaison pivot entre la troisième bielle et un bras de liaison selon le septième axe, et une deuxième liaison pivot entre le bras de liaison et le deuxième support selon le sixième axe.

L'invention a aussi pour objet un système d'étalonnage d'un instrument optique, comprenant un dispositif de positionnement angulaire tel que décrit précédemment, un élément de l'instrument optique étant apte à être fixé au deuxième support.

L'invention a notamment pour avantage qu'elle permet d'obtenir à la fois un faible rapport de transmission autour des positions angulaires d'intérêt, et un rapport de transmission plus important en dehors, ce qui permet d'augmenter la vitesse de passage entre les différentes positions.

L'invention sera mieux comprise et d'autres avantages apparaîtront à la lecture de la description qui va suivre, faite en regard de dessins annexés sur lesquels :
- les figures 1 et 2 représentent, dans deux vues en perspective, un exemple de dispositif de positionnement angulaire selon l'invention ;
- la figure 3 illustre, sous forme d'un graphique, l'évolution d'une position angulaire d'une pièce en sortie d'un ensemble mécanique de transmission de mouvement du dispositif de positionnement angulaire des figures 1 et 2 en fonction d'une position angulaire d'une pièce en entrée de cet ensemble mécanique.

De manière générale, le dispositif de positionnement angulaire selon l'invention comprend un châssis et deux ensembles mécaniques de transmission de mouvement imbriqués. Le premier ensemble mécanique comprend un premier support en liaison pivot avec le châssis selon un premier axe. Ce support peut être entraîné en rotation par un premier moteur via deux bielles générant deux points morts pour le premier support. Le deuxième ensemble mécanique comprend un deuxième support en liaison pivot avec le premier support selon un deuxième axe, non parallèle au premier axe. Ce deuxième support peut être entraîné en rotation par un deuxième moteur via deux bielles générant deux points morts pour le deuxième support. Le dispositif de positionnement angulaire est configuré de manière à ce que l'un des points morts du premier support puisse coïncider avec l'un des points morts du deuxième support.

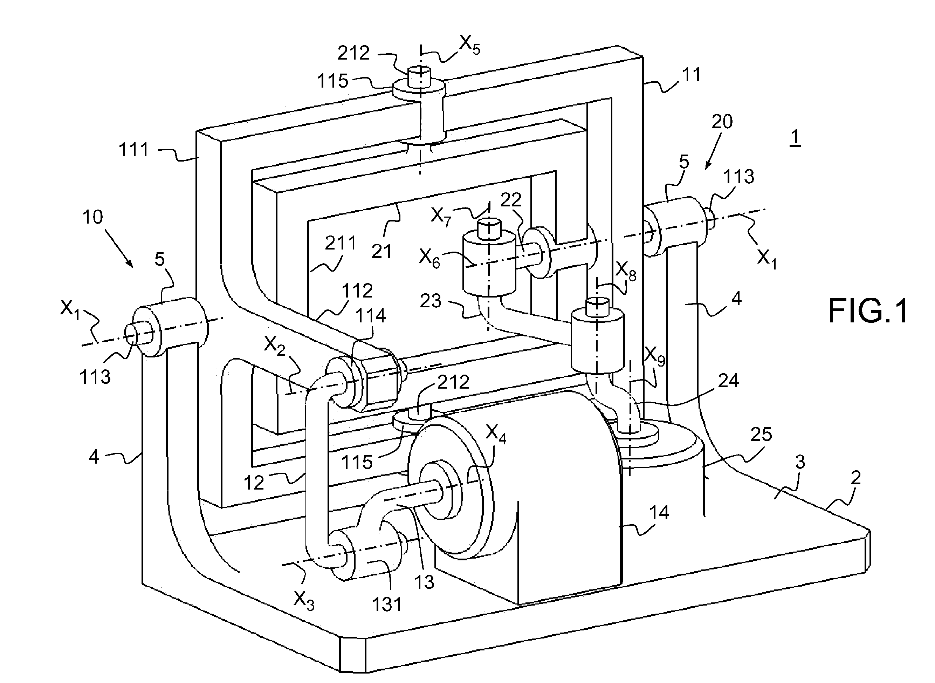

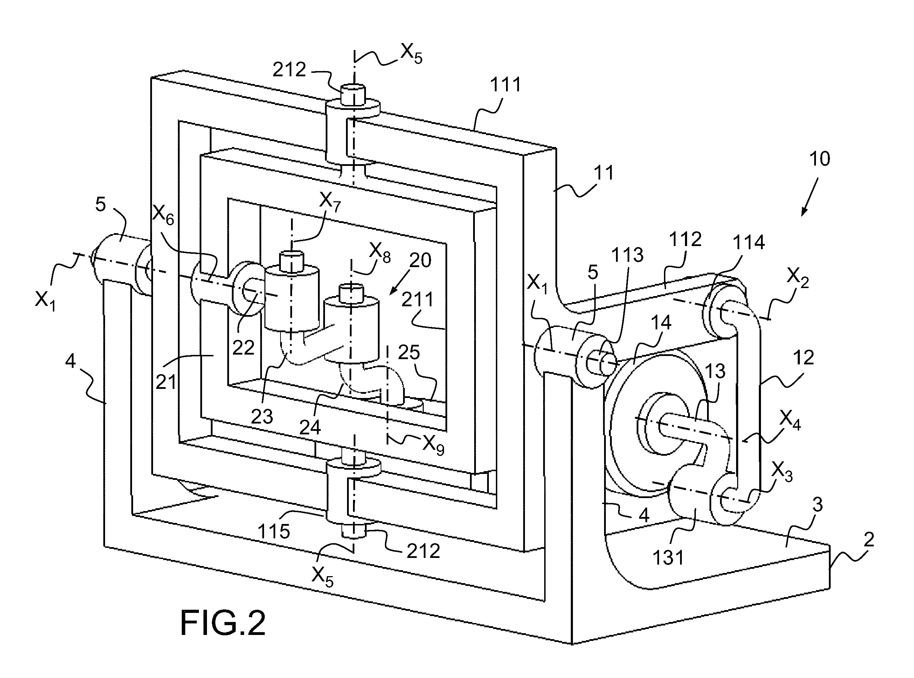

Les figures 1 et 2 représentent, dans deux vues en perspective, un exemple de dispositif de positionnement angulaire selon l'invention. Le dispositif de positionnement angulaire 1 comprend un châssis 2, un premier ensemble mécanique de transmission de mouvement 10, et un deuxième ensemble mécanique de transmission de mouvement 20. Le premier ensemble mécanique 10 comprend un premier support 11, deux bielles 12 et 13, et un premier dispositif d'actionnement 14. Le support 11 est en liaison pivot avec le châssis 2 selon un premier axe X₁. La première bielle 12 est en liaison pivot avec le support 11 selon un deuxième axe X₂, parallèle à l'axe X₁. La deuxième bielle 13 est en liaison pivot avec la première bielle 12 selon un troisième axe X₃, parallèle aux axes X₁ et X₂, et en liaison pivot avec le châssis 2 selon un quatrième axe X₄, parallèle aux axes X₁, X₂ et X₃. Le dispositif d'actionnement 14 est apte à entraîner la deuxième bielle en rotation autour de l'axe X₄. Dans le présent exemple de réalisation, le châssis 2 comprend une plaque 3 et deux bras 4 s'étendant depuis la plaque 3 dans une direction orthogonale au plan de la plaque 3. Le support 11 comprend un cadre 111 rectangulaire, et un bras d'entraînement 112 s'étendant dans une direction orthogonale au plan du cadre 111. Une première extrémité du bras d'entraînement 112 est solidaire du cadre 111. La liaison pivot entre le support 11 et le châssis 2 est réalisée au moyen de deux arbres ou pions 113 fixés sur les côtés latéraux du cadre 111 et de deux paliers 5 formés aux extrémités des bras 4. La liaison pivot entre le support 11 et la bielle 12 est réalisée au niveau de la deuxième extrémité du bras d'entraînement 112. La bielle 12 comprend un coude à chacune de ses extrémités de manière à ce que l'une des extrémités vienne s'insérer dans un palier 114 formé dans le bras d'entraînement 112. L'autre extrémité de la bielle 12 vient s'insérer dans un palier 131 formé à l'une des extrémités de la bielle 13. Le dispositif d'actionnement 14 est un moteur rotatif comprenant un stator solidaire du châssis 2 et un rotor solidaire de la deuxième extrémité de la bielle 13 et tournant autour de l'axe X₄. Il s'agit par exemple d'un moteur pas à pas. La liaison pivot entre la bielle 13 et le châssis 2 est ainsi réalisée par le moteur rotatif. Le deuxième ensemble mécanique de transmission de mouvement 20 comprend un deuxième support 21, un bras de liaison 22, deux bielles 23 et 24, et un deuxième dispositif d'actionnement 25. Le deuxième support 21 est en liaison pivot avec le premier support 11 selon un cinquième axe X₅. Cet axe X₅ n'est pas parallèle aux axes X₁ à X₄. Il peut être, comme dans l'exemple de réalisation des figures 1 et 2, orthogonal aux axes X₁ à X₄. Le bras de liaison 22 est en liaison pivot avec le support 21 selon un axe X₆, dont l'orientation est discutée plus loin. La troisième bielle 23 est en liaison pivot avec le bras de liaison 22 selon un axe X₇, parallèle à l'axe X₅. La quatrième bielle 24 est en liaison pivot avec la troisième bielle 23 selon un axe X₈, et en liaison pivot avec le châssis 2 selon un axe X₉. Les axes X₈ et X₉ sont parallèles aux axes X₅ et X₇. Dans l'exemple de réalisation des figures 1 et 2, le support 21 comprend un cadre 211 rectangulaire s'inscrivant dans le cadre 111 du premier support 11. La liaison pivot entre le deuxième support 21 et le premier support 11 est réalisée au moyen de deux pions 212 fixés sur les côtés longitudinaux du cadre 211 et de deux paliers 115 formés sur les côtés longitudinaux du cadre 111. De manière analogue, la liaison pivot entre le support 21 et le bras de liaison 22, la liaison pivot entre le bras de liaison 22 et la bielle 23, et la liaison pivot entre les bielles 23 et 24 peuvent être chacune réalisées au moyen d'un pion et d'un palier coopérant l'un avec l'autre. Le dispositif d'actionnement 25 est un moteur rotatif comprenant un stator solidaire du châssis 2 et un rotor solidaire de la bielle 24 et tournant autour de l'axe X₉. Il peut également s'agir d'un moteur pas à pas. La liaison pivot entre la bielle 24 et le châssis 2 est ainsi réalisée par le moteur rotatif.

Dans l'exemple de réalisation des figures 1 et 2, il a été considéré que les articulations entre les différents éléments étaient réalisées par des pions et des paliers formant des liaisons pivots. De manière générale, ces articulations peuvent être réalisées par tout mécanisme introduisant un degré de liberté en rotation autour de l'axe considéré. En particulier, chaque liaison pivot pourrait être remplacée par une liaison pivot glissant ayant le même axe de rotation ou par une liaison rotule. Par ailleurs, la liaison pivot entre le support 21 et le bras de liaison 22, et la liaison pivot entre le bras 22 et la bielle 23 pourraient être combinées en une seule liaison rotule à doigt entre le support 21 et la bielle 23 selon un axe orthogonal aux axes X₆ et X₇. Le bras de liaison 22 n'est alors plus nécessaire. La liaison rotule à doigt pourrait aussi être remplacée par une liaison rotule ou une liaison linéaire annulaire.

Le dispositif de positionnement angulaire selon l'invention est commandé par les dispositifs d'actionnement 14 et 25. Ces dispositifs d'actionnement fonctionnent à tour de rôle de manière à obtenir trois positions angulaires distinctes pour le deuxième support 21. Ce support 21 est apte à recevoir un élément à positionner, par exemple un miroir d'un instrument optique. Le dispositif d'actionnement 14 permet d'orienter le deuxième support 21 autour de l'axe X₁. Son actionnement entraîne en rotation la bielle 13 autour de l'axe X₄, laquelle entraîne en rotation la bielle 12 autour de son centre instantané de rotation, qui elle-même entraîne en rotation le bras d'entraînement 112 autour de l'axe X₁, et donc les cadres 111 et 211. Il est à noter que la rotation des cadres 111 et 211 n'est possible que si le cadre 211 est apte à tourner par rapport au châssis 2 selon le même axe que celui de la liaison pivot entre le cadre 111 et le châssis 2, c'est-à-dire si l'axe X₆ est confondu avec l'axe X₁. Le premier ensemble mécanique 10 est configuré de manière à pouvoir prendre deux configurations particulières. Dans chacune de ces configurations, les bielles 12 et 13 génèrent un point mort pour le support 11. De manière générale, on entend par point mort entre deux bielles en liaison pivot entre elles, une position respective particulière de ces bielles pour laquelle chaque élément en liaison pivot avec l'une de ces bielles subit une inversion de mouvement lors du passage par cette position. Le mouvement peut être un mouvement de rotation ou de translation. En l'occurrence, les bielles 12 et 13 génèrent un point mort pour le support 11 lorsque l'axe X₃ de la liaison pivot entre ces bielles vient coïncider avec le plan passant par les axes X₂ et X₄ des liaisons pivots entre la bielle 12 et le bras d'entraînement 112, et entre la bielle 13 et le châssis 2, respectivement. Dans l'exemple de réalisation des figures 1 et 2, un premier point mort est généré lorsque l'axe X₄ se situe entre les axes X₂ et X₃, comme représenté sur les figures 1 et 2, et un deuxième point mort est généré lorsque l'axe X₃ se situe entre les axes X₂ et X₄. Pour d'autres configurations du premier ensemble mécanique 10, un point mort pourrait être généré lorsque l'axe X₂ se situe entre les axes X₃ et X₄. Lors du passage par un point mort, le sens de rotation du support 11 s'inverse pour un même sens de rotation du dispositif d'actionnement 14. Cette inversion du sens de rotation s'effectue pour deux positions angulaires α₁ et α₂ du support 11 autour de l'axe X₁. Ainsi, une rotation continue de la bielle 13 autour de l'axe X₄ entraîne un mouvement de balancier du support 11 entre les positions angulaires α₁ et α₂. En outre, le passage par un point mort entraîne une diminution du rapport de transmission entre le déplacement angulaire de la bielle 13 et celui du support 11. Les positions angulaires α₁ et α₂ sont donc des positions angulaires relativement stables.

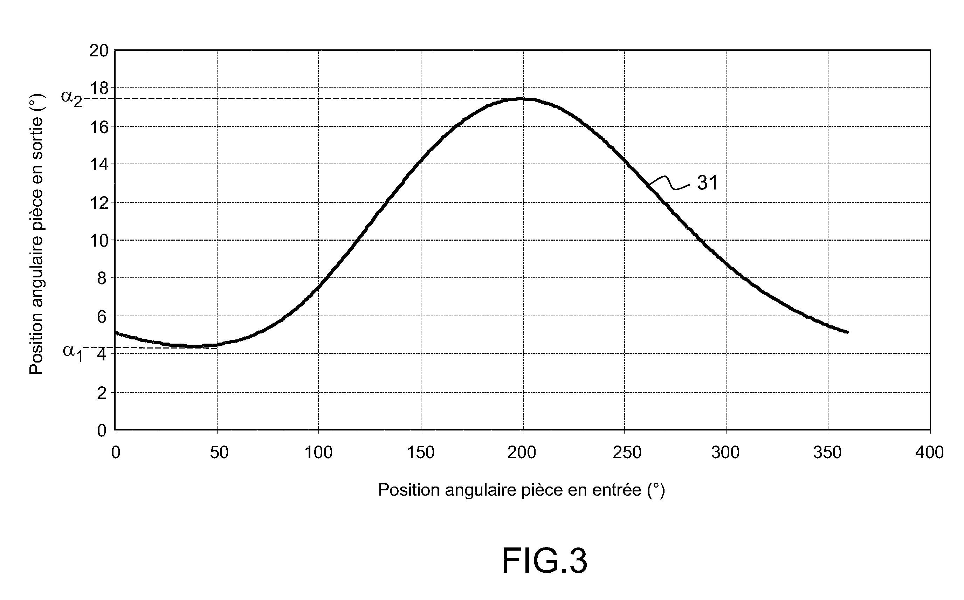

La figure 3 illustre, sous forme d'un graphique, l'évolution de la position angulaire du support 11 en fonction de la position angulaire de la bielle 13 pour le premier ensemble mécanique de transmission de mouvement 10 des figures 1 et 2. Cette évolution est représentée par une courbe 31. Chaque position angulaire est repérée par rapport à une position angulaire de référence. Comme indiqué précédemment, un mouvement de rotation de la bielle 13 entraîne un mouvement de rotation du support 11 dans un premier sens de rotation jusqu'à une position angulaire α₁ pour laquelle les bielles 12 et 13 génèrent un premier point mort. À l'approche de cette position angulaire α₁, le rapport de transmission entre le déplacement angulaire de la bielle 13 et le déplacement angulaire du support 11 diminue, comme le montre l'aplatissement de la courbe 31 au voisinage de la position angulaire α₁, jusqu'à s'annuler à cette position angulaire. En quittant la position angulaire α₁, le mouvement de rotation du support 11 s'inverse. Le rapport de transmission augmente progressivement en s'éloignant de la position angulaire α₁, puis diminue à nouveau en approchant de la position angulaire α₂, pour laquelle les bielles 12 et 13 génèrent un deuxième point mort. À la position angulaire α₂, il s'annule et le mouvement de rotation du support 11 s'inverse à nouveau, retrouvant ainsi le premier sens de rotation. Le rapport de transmission augmente ensuite progressivement puis diminue à nouveau à l'approche de la position angulaire α₁, la bielle 13 ayant fait un tour complet. La figure 3 montre ainsi que, pour un tour complet de la bielle 13, le support 11 oscille entre les positions angulaires α₁ et α₂. Dans la mesure où le débattement angulaire entre ces positions est relativement faible, soit environ 13 degrés dans l'exemple de réalisation des figures 1 et 2, il apparaît clairement que le rapport de transmission moyen entre le déplacement angulaire de la bielle 13 et le déplacement angulaire du support 11 est largement inférieur à un. Surtout, le passage par les points morts entraîne localement une importante diminution du rapport de transmission.

Le dispositif d'actionnement 25 permet d'orienter le deuxième support 21 autour de l'axe X₅. Son actionnement entraîne en rotation la bielle 24 autour de l'axe X₉, laquelle entraîne en rotation la bielle 23 autour de son centre instantané de rotation, qui elle-même entraîne en rotation le bras de liaison 22 et le support 21 autour de l'axe X₅. Il est à noter que la rotation du support 21 n'est possible que si l'axe X₅ de la liaison pivot entre les supports 11 et 21 est parallèle aux axes X₇, X₈ et X₉. L'orientation de l'axe X₅ dépend de la position angulaire du support 11 autour de l'axe X₁. De préférence, le premier ensemble mécanique 10 est configuré de manière à ce que l'axe X₅ soit parallèle aux axes X₇, X₈ et X₉ pour l'un de ses deux points morts, c'est-à-dire lorsque le support 11 est dans l'une des positions angulaires α₁ et α₂. L'orientation de l'axe X₅ parallèlement aux axes X₇, X₈ et X₉ est ainsi effectuée avec le maximum de précision. Le deuxième ensemble mécanique de transmission de mouvement 20 est configuré de manière à pouvoir prendre deux configurations particulières dans chacune desquelles les bielles 23 et 24 génèrent un point mort pour le support 21. En l'occurrence, un point mort est généré pour le support 21 lorsque l'axe X₈ de la liaison pivot entre ces bielles vient coïncider avec le plan passant par les axes X₇ et X₉ des liaisons pivots entre la bielle 23 et le bras de liaison 22, et entre la bielle 24 et le châssis 2, respectivement. Dans l'exemple de réalisation des figures 1 et 2, un premier point mort est généré lorsque l'axe X₈ se situe entre les axes X₇ et X₉, comme représenté sur ces figures, et un deuxième point mort est généré lorsque l'axe X₉ se situe entre les axes X₇ et X₈. Pour d'autres configurations du deuxième ensemble mécanique 20, un point mort pourrait être généré lorsque l'axe X₇ se situe entre les axes X₈ et X₉. Lors du passage par un point mort, le sens de rotation du support 21 s'inverse pour un même sens de rotation du dispositif d'actionnement 25. Cette inversion du sens de rotation s'effectue pour deux positions angulaires β₁ et β₂ du support 21 autour de l'axe X₅. Ainsi, une rotation continue de la bielle 24 autour de l'axe X₉ entraîne un mouvement de balancier du support 21 entre les positions angulaires β₁ et β₂. Ces positions sont des positions stables puisque le rapport de transmission entre le déplacement angulaire de la bielle 24 et celui du support 21 s'annule localement. De préférence, le deuxième ensemble mécanique 20 est configuré de manière à ce que l'axe X₆ soit confondu avec l'axe X₁ pour l'un de ses deux points morts, c'est-à-dire lorsque le support 21 est dans l'une des positions angulaires β₁ et β₂. L'alignement de l'axe X₆ avec l'axe X₁ est ainsi effectué avec le maximum de précision.

Le dispositif de positionnement angulaire selon l'invention est particulièrement bien adapté pour réaliser l'étalonnage d'un instrument optique. Un élément de l'instrument optique, par exemple un miroir, peut être fixé au deuxième support. Le premier ensemble mécanique de transmission de mouvement permet d'orienter précisément l'élément pour deux positions angulaires autour d'un premier axe, et le deuxième ensemble mécanique de transmission de mouvement permet de l'orienter précisément pour deux positions angulaires autour d'un deuxième axe, non parallèle au premier. L'une des positions angulaires d'intérêt autour du premier axe correspond à l'une des positions angulaires d'intérêt autour du deuxième axe, de sorte que l'élément de l'instrument optique est positionné précisément autour du premier et du deuxième axe pour trois positions distinctes.

## Revendications

1. Dispositif de positionnement angulaire comportant un châssis (2), un premier ensemble mécanique de transmission de mouvement (10) et un deuxième ensemble mécanique de transmission de mouvement (20), le premier ensemble mécanique (10) comprenant :
▪ un premier support (11) en liaison pivot avec le châssis (2) selon un premier axe (X₁),
▪ une première bielle (12) en liaison pivot avec le premier support (11) selon un deuxième axe (X₂), parallèle au premier axe (X₁),
▪ une deuxième bielle (13) en liaison pivot avec la première bielle (12) selon un troisième axe (X₃), et en liaison pivot avec le châssis (2) selon un quatrième axe (X₄), les troisième et quatrième axes étant parallèles aux premier et deuxième axes, et
un premier dispositif d'actionnement (14) apte à entraîner la deuxième bielle (13) en rotation selon le quatrième axe (X₄),
le deuxième ensemble mécanique de transmission de mouvement (20) comprenant :
▪ un deuxième support (21) en liaison pivot avec le premier support (11) selon un cinquième axe (X₅), non parallèle au premier axe (X₁),
▪ une troisième bielle (23) en liaison pivot avec le deuxième support selon un septième axe (X₇), parallèle au cinquième axe (X₅),
▪ une quatrième bielle (24) en liaison pivot avec la troisième bielle (23) selon un huitième axe (X₈), et en liaison pivot avec le châssis (2) selon un neuvième axe (X₉), les huitième et neuvième axes étant parallèles aux cinquième et septième axes, et
▪ un deuxième dispositif d'actionnement (25) apte à entraîner la quatrième bielle (24) en rotation selon le neuvième axe (X₉),
le dispositif de positionnement angulaire (1) étant configuré de manière à ce que le cinquième axe soit parallèle au septième axe (X₇) dans l'une des positions angulaires (α₁, α₂) du premier support (11) autour du premier axe (X₁)
**caractérisé en ce que**
le premier ensemble mécanique de transmission de mouvement (10) étant configuré de manière à ce que le premier support (11) puisse prendre deux positions angulaires distinctes (α₁, α₂) autour du premier axe (X₁) pour chacune desquelles la première (12) et la deuxième bielle (13) génèrent un point mort pour le premier support (11),
**en ce que**
la troisième bielle (23) est en liaison pivot avec le deuxième support (21) selon un sixième axe (X₆) confondu avec le premier axe dans l'une des positions angulaires du deuxième support (21) autour du cinquième axe (X₅), et **en ce que**
le deuxième ensemble mécanique de transmission de mouvement (20) étant configuré de manière à ce que le deuxième support (21) puisse prendre deux positions angulaires distinctes autour du cinquième axe (X₅) pour chacune desquelles la troisième (23) et la quatrième bielle (24) génèrent un point mort pour le deuxième support (21).

2. Dispositif selon la revendication 1, dans lequel les septième, huitième et neuvième axes (X₇, X₈, X₉) sont orthogonaux aux premier, deuxième, troisième et quatrième axes (X₁, X₂, X₃, X₄).

3. Dispositif selon l'une des revendications 1 et 2, dans lequel le premier dispositif d'actionnement (14) comprend un moteur rotatif comportant un stator solidaire du châssis (2) du dispositif de positionnement angulaire (1), et un rotor solidaire de la deuxième bielle (13).

4. Dispositif selon l'une des revendications précédentes, dans lequel le deuxième dispositif d'actionnement (25) comprend un moteur rotatif comportant un stator solidaire du châssis (2) du dispositif de positionnement angulaire (1), et un rotor solidaire de la quatrième bielle (24).

5. Dispositif selon l'une des revendications précédentes, dans lequel le premier support (11) comporte un bras d'entraînement (112), la liaison pivot du premier support (11) avec le châssis (2) étant réalisée au niveau d'une première extrémité du bras d'entraînement (112), et la liaison pivot du premier support (11) avec la première bielle (12) étant réalisée au niveau d'une deuxième extrémité du bras d'entraînement (112).

6. Dispositif selon l'une des revendications précédentes, dans lequel le premier support (11) comporte un cadre (111) à l'intérieur duquel est disposé le deuxième support (21).

7. Dispositif selon l'une des revendications précédentes, dans lequel la première (12) et la deuxième bielle (13) génèrent un point mort pour le premier support (11) lorsque le troisième axe (X₃) coïncide avec le plan contenant le deuxième axe (X₂) et le quatrième axe (X₄).

8. Dispositif selon l'une des revendications précédentes, dans lequel la troisième (23) et la quatrième bielle (24) génèrent un point mort pour le deuxième support (21) lorsque le huitième axe (X₈) coïncide avec le plan contenant le septième axe (X₇) et le neuvième axe (X₉).

9. Dispositif selon l'une des revendications précédentes, dans lequel les liaisons pivots entre la troisième bielle (23) et le deuxième support (21) comprennent une première liaison pivot entre la troisième bielle (23) et un bras de liaison (22) selon le septième axe (X₇), et une deuxième liaison pivot entre le bras de liaison (22) et le deuxième support (21) selon le sixième axe (X₆).

10. Système d'étalonnage d'un instrument optique, comprenant un dispositif de positionnement angulaire (1) selon l'une des revendications précédentes, un élément de l'instrument optique étant apte à être fixé au deuxième support (21).

## Patentansprüche

1. Vorrichtung zur Winkelpositionierung, die ein Gestell (2), eine erste mechanische Bewegungsübertragungseinheit (10) und eine zweite mechanische Bewegungsübertragungseinheit (20) aufweist, wobei die erste mechanische Einheit (10) umfasst:
▪ eine erste Stütze (11) in Drehzapfenverbindung mit dem Gestell (2) gemäß einer ersten Achse (X₁),
▪ eine erste Pleuelstange (12) in Drehzapfenverbindung mit der ersten Stütze (11) gemäß einer zweiten, zur ersten Achse (X₁) parallelen Achse (X₂),
▪ eine zweite Pleuelstange (13) in Drehzapfenverbindung mit der ersten Pleuelstange (12) gemäß einer dritten Achse (X₃) und in Drehzapfenverbindung mit dem Gestell (2) gemäß einer vierten Achse (X₄), wobei die dritte und vierte Achse zur ersten und zweiten Achse parallel sind, und
eine erste Betätigungsvorrichtung (14), die imstande ist, die zweite Pleuelstange (13) rotierend gemäß der vierten Achse (X₄) anzutreiben,
wobei die zweite mechanische Bewegungsübertragungseinheit (20) umfasst:
▪ eine zweite Stütze (21) in Drehzapfenverbindung mit der ersten Stütze (11) gemäß einer fünften, zur ersten Achse (X₁) nicht parallelen Achse (X₅),
▪ eine dritte Pleuelstange (23) in Drehzapfenverbindung mit der zweiten Stütze gemäß einer siebten, zur fünften Achse (X₅) parallelen Achse (X₇),
▪ eine vierte Pleuelstange (24) in Drehzapfenverbindung mit der dritten Pleuelstange (23) gemäß einer achten Achse (X₈) und in Drehzapfenverbindung mit dem Gestell (2) gemäß einer neunten Achse (X₉), wobei die achte und neunte Achse zur fünften und siebten Achse parallel sind, und
▪ eine zweite Betätigungsvorrichtung (25), die imstande ist, die vierte Pleuelstange (24) rotierend gemäß der neunten Achse (X₉) anzutreiben,
wobei die Vorrichtung zur Winkelpositionierung (1) derart konfiguriert ist, dass die fünfte Achse in einer der Winkelpositionen (α₁, α₂) der erste Stütze (11) um die erste Achse (X₁) zur siebten Achse (X₇) parallel ist,
**dadurch gekennzeichnet, dass**
die erste mechanische Bewegungsübertragungseinheit (10) derart konfiguriert ist, dass die erste Stütze (11) zwei unterschiedliche Winkelpositionen (α₁, α₂) um die erste Achse (X₁) einnehmen kann, für die für jede die erste (12) und die zweite Pleuelstange (13) einen Totpunkt für die erste Stütze (11) erzeugen,
und dadurch, dass
die dritte Pleuelstange (23) mit der zweiten Stütze (21) gemäß einer sechsten Achse (X₆), die mit der ersten Achse in einer der Winkelpositionen der zweiten Stütze (21) um die fünfte Achse (X₅) zusammenfällt, in Drehzapfenverbindung ist,
und dadurch, dass
die zweite mechanische Bewegungsübertragungseinheit (20) derart konfiguriert ist, dass die zweite Stütze (21) zwei unterschiedliche Winkelpositionen um die fünfte Achse (X₅) einnehmen kann, für die für jede die dritte (23) und die vierte Pleuelstange (24) einen Totpunkt für die zweite Stütze (21) erzeugen.

2. Vorrichtung nach Anspruch 1, wobei die siebte, achte und neunte Achse (X₇, X₈, X₉) zur ersten, zweiten, dritten und vierten Achse (X₁, X₂, X₃, X₄) orthogonal sind.

3. Vorrichtung nach einem der Ansprüche 1 und 2, wobei die erste Betätigungsvorrichtung (14) einen Drehmotor umfasst, der einen mit dem Gestell (2) der Vorrichtung zur Winkelpositionierung (1) fest verbundenen Stator und einen mit der zweiten Pleuelstange (13) fest verbundenen Rotor aufweist.

4. Vorrichtung nach einem der vorangehenden Ansprüche, wobei die zweite Betätigungsvorrichtung (25) einen Drehmotor umfasst, der einen mit dem Gestell (2) der Vorrichtung zur Winkelpositionierung (1) fest verbundenen Stator und einen mit der vierten Pleuelstange (24) fest verbundenen Rotor aufweist.

5. Vorrichtung nach einem der vorangehenden Ansprüche, wobei die erste Stütze (11) einen Antriebsarm (112) aufweist, wobei die Drehzapfenverbindung der ersten Stütze (11) mit dem Gestell (2) im Bereich eines ersten Endes des Antriebsarms (112) realisiert ist und die Drehzapfenverbindung der ersten Stütze (11) mit der ersten Pleuelstange (12) im Bereich eines zweiten Endes des Antriebsarms (112) realisiert ist.

6. Vorrichtung nach einem der vorangehenden Ansprüche, wobei die erste Stütze (11) einen Rahmen (111) aufweist, in dessen Innern die zweite Stütze (21) angeordnet ist.

7. Vorrichtung nach einem der vorangehenden Ansprüche, wobei die erste (12) und die zweite Pleuelstange (13) einen Totpunkt für die erste Stütze (11) erzeugen, wenn die dritte Achse (X₃) mit der Ebene zusammenfällt, die die zweite Achse (X₂) und die vierte Achse (X₄) enthält.

8. Vorrichtung nach einem der vorangehenden Ansprüche, wobei die dritte (23) und die vierte Pleuelstange (24) einen Totpunkt für die zweite Stütze (21) erzeugen, wenn die achte Achse (X₈) mit der Ebene zusammenfällt, die die siebte Achse (X₇) und die neunte Achse (X₉) enthält.

9. Vorrichtung nach einem der vorangehenden Ansprüche, wobei die Drehzapfenverbindungen zwischen der dritten Pleuelstange (23) und der zweiten Stütze (21) eine erste Drehzapfenverbindung zwischen der dritten Pleuelstange (23) und einem Verbindungsarm (22) gemäß der siebten Achse (X₇) und eine zweite Drehzapfenverbindung zwischen dem Verbindungsarm (22) und der zweiten Stütze (21) gemäß der sechsten Achse (X₆) umfassen.

10. Eichsystem eines optischen Instruments, das eine Vorrichtung zur Winkelpositionierung (1) nach einem der vorangehenden Ansprüche umfasst, wobei ein Element des optischen Instruments imstande ist, auf der zweiten Stütze (21) befestigt zu sein.

## Claims

1. Angular positioning device comprising a frame (2), a first mechanical movement transmission assembly (10), and a second mechanical movement transmission assembly (20), the first mechanical assembly (10) comprising:
▪ a first support (11) in pivot connection with the frame (2), according to a first axis (X₁);
▪ a first connecting rod (12) in pivot connection with the first support (11), according to a second axis (X₂), which is parallel with the first axis (X₁);
▪ a second connecting rod (13) in pivot connection with the first connecting rod (12), according to a third axis (X₃), and in pivot connection with the frame (2) according to a fourth axis (X₄), the third and fourth axes being parallel with the first and second axes; and
a first actuating device (14) which can rotate the second connecting rod (13) according to the fourth axis (X₄),
the second mechanical movement transmission assembly (20) comprising:
▪ a second support (21) in pivot connection with the first support (11) according to a fifth axis (X₅), which is not parallel with the first axis (X₁);
▪ a third connecting rod (23) in pivot connection with the second support according to a seventh axis (X₇), which is parallel with the fifth axis (X₅);
▪ a fourth connecting rod (24) in pivot connection with the third connecting rod (23) according to an eighth axis (X₈), and in pivot connection with the frame (2) according to a ninth axis (X₉), the eighth and ninth axes being parallel with the fifth and seventh axes; and
▪ a second actuating device (25) which can rotate the fourth connecting rod (24) according to the ninth axis (X₉),
the angular positioning device (1) being configured such that the fifth axis is parallel with the seventh axis (X₇) in one of the angular positions (α₁, α₂) of the first support (11) around the first axis (X₁)
**characterized in that**
the first mechanical movement transmission assembly (10) being configured such that the first support (11) can adopt two distinct angular positions (α₁, α₂) around the first axis (X₁), for each of which the first (12) and second (13) connecting rods generate a dead centre for the first support (11),
**in that**
a third connecting rod (23) in pivot connection with the second support (21) according to a sixth axis (X₆) combined with the first axis, in one of the angular positions of the second support (21) around the fifth axis (X₅),
and **in that**
the second mechanical movement transmission assembly (20) being configured such that the second support (21) can adopt two distinct angular positions around the fifth axis (X₅), for each of which the third (23) and fourth (24) connecting rods generate a dead centre for the second support (21),

2. Device according to Claim 1, wherein the seventh, eighth and ninth axes (X₇, X₈, X₉) are at right angles to the first, second, third and fourth axes (X₁, X₂, X₃, X₄).

3. Device according to one of Claims 1 and 2, wherein the first actuating device (14) comprises a rotary motor comprising a stator which is integral with the frame (2) of the angular positioning device (1), and a rotor which is integral with the second connecting rod (13).

4. Device according to one of the preceding claims, wherein the second actuating device (25) comprises a rotary motor comprising a stator which is integral with the frame (2) of the angular positioning device (1), and a rotor which is integral with the fourth connecting rod (24).

5. Device according to one of the preceding claims, wherein the first support (11) comprises a drive arm (112), the pivot connection of the first support (11) with the frame (2) being provided at a first end of the drive arm (112), and the pivot connection of the first support (11) with the first connecting rod (12) being provided at a second end of the drive arm (112).

6. Device according to one of the preceding claims, wherein the first support (11) comprises a framework (111) inside which the second support (21) is arranged.

7. Device according to one of the preceding claims, wherein the first (12) and second (13) connecting rods generate a dead centre for the first support (11) when the third axis (X₃) coincides with the plane which contains the second axis (X₂) and the fourth axis (X₄).

8. Device according to one of the preceding claims, wherein the third (23) and fourth (24) connecting rods generate a dead centre for the second support (21) when the eighth axis (X₈) coincides with the plane containing the seventh axis (X₇) and the ninth axis (X₉).

9. Device according to one of the preceding claims, wherein the pivot connections between the third connecting rod (23) and the second support (21) comprise a first pivot connection between the third connecting rod (23) and a connection arm (22) according to the seventh axis (X₇), and a second pivot connection between the connection arm (22) and the second support (21) according to the sixth axis (X₆).

10. System for calibration of an optical instrument, comprising an angular positioning device (1) according to one of the preceding claims, an element of the optical instrument being able to be secured on the second support (21).
